# EUROPEAN PATENT APPLICATION

(11) **EP 1 481 773 A1**
(43) Date of publication of application: **01.12.2004**
(21) Application number: 04252878.6
(22) Date of filing: 18.05.2004
(51) Int. Cl.: B25J 13/00

(54) **Robot system comprising a plurality of robots controlled by a single voice recognition device**

(30) Priority: 27.05.2003 JP 2003149358
(71) Applicant: FANUC LTD, Minamitsuru-gun, Yamanashi 401-0597 (JP)
(72) Inventor: Hashimoto, Yoshiki, Hadano-shi, Kanagawa 257-0025 (JP); Kubo, Yoshiyuki, Room 11-602 FANUC Manshonharimomi, Minamitsuru-gun, Yamanashi 401-0511 (JP)
(74) Representative: Billington, Lawrence Emlyn

(57) **Abstract**

When commands are inputted by voice through any one of voice input devices (D1, D2) digitalized voice signals are transmitted to a robot controller (C1, C2). The robot controller (C1, C2) transmits the signals to a voice recognition device (A) using a communication means (B). The voice recognition device (A) executes voice recognition processing to convert the signals into command data and then send back the command data to the robot controller (C1, C2) which transmitted the signals using communication means (B). On receiving the command data, the robot controller (C1, C2) executes the commands.

## Description

### BACKGROUND OF THE INVENTION

### 1.Field, of the Invention:

This invention relates to a robot system comprising a plurality of robot controllers and a plurality of robots. More specifically, the present invention relates to an improvement of the robot system allowing input of commands by voice input.

### 2.Description of the Related Art:

There has already been known a robot system in which a voice recognition device is provided on a robot controller while a voice input device (a microphone and the like; hereinafter referred to in the same manner) is provided on this robot controller or on a teaching pendant connected to the robot controller, so as to allow commands related to robot movement to be given by voice. When this robot system is composed of a plurality of robots andapluralityof robot controllers controlling those robots, conventionally, the voice recognition device is provided on every robot controller and the voice input device is provided on every robot controller or on the teaching pendant connected to every robot controller, in order to give commands by voice to each of the robot controllers.

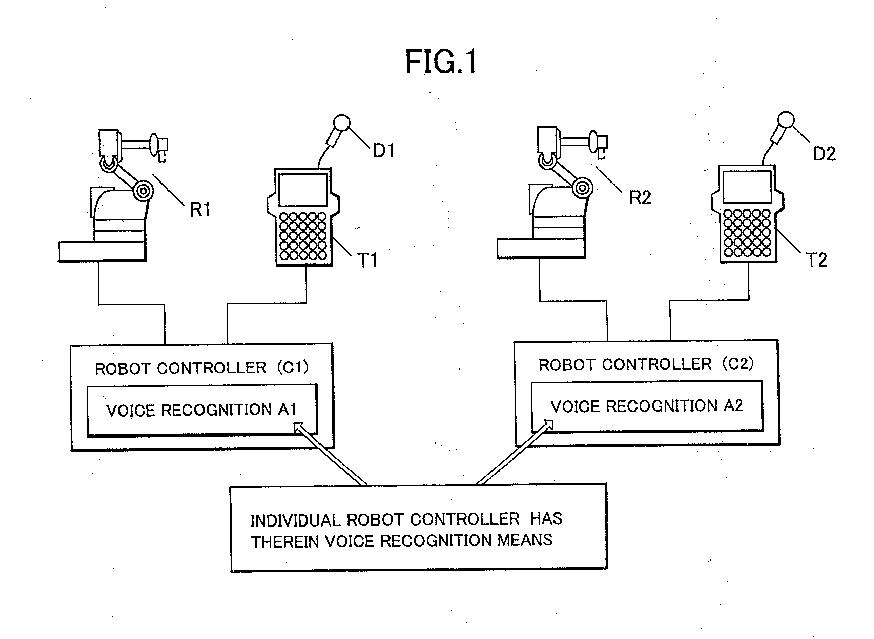

Fig. 1 illustrates a state robot system employing such a voice recognition system in which two robots and two robot controllers are comprised. More specifically, individual robot controllers C1 and C2 have exclusive voice recognition devices A1 and A2 in the inside, respectively, which analyses voices inputted from corresponding voice input devices D1 and D2 (herein, microphones provided on teaching pendants T1 and T2) and converts them into robot command data to be used as commands for the robots connected to each robot controller. Alternatively, the voice input devices D1 and D2 may be provided on the robot controllers C1 and C2, respectively.

A problem which may arise here is that the voice recognition devices A1 and A2 have to be provided for individual robot controllers C1 and C2 in order to allow each of robots R1 and R2 to input commands by voice in. The voice recognition devices A1 and A2 are generally expensive and therefore, a high cost will be caused, for instance, if a system employing a plurality of robots allowing input of commands by voice is introduced within a factory.

### SUMMARY OF THE INVENTION

The present invention is characterized in that one voice recognition device is shared with a plurality of robots in a case where there exist a plurality of sets of robot and robot controller allowing input of commands by voice.

A robot system according to the present invention comprises a plurality of robot controllers, a plurality of robots respectively controlled by any one of the plurality of robot controllers and one voice recognition device; a voice input device is provided, for each of the robot controllers, on a robot controller itself or a teaching pendant connected to a robot controller; and the voice recognition device is connected to the robot controllers through communication means.

Further, each of the robot controllers has means of transmitting voice data, inputted in its own voice input device, to the voice recognition device through the communication means; the voice recognition device has means for receiving voice data transmitted from each of the robot controllers and analyzing and converting the data into robot command data, and means for send back the converted robot command data to the robot controller which transmitted the voice data to be converted through the communication means; and each of the robot controllers further has means for executing the command in accordance with the robot command data sent back from the voice recognition device.

In the above robot system, each of the robot controllers may have filtering means for applying filtering processing to voice data inputted in its own voice input device, and the voice data of which data amount may have been reduced through the filtering means is transmitted to the voice input device.

In this way, in the present invention, a voice recognition device is not provided on every individual robot controllers, unlike a conventional technique, but is shared by a plurality of robots or robot controllers by using communication means, so that a system using a plurality of robots allowing input of commands by voice may be introduced without incurring a large increase in cost.

As described above, in the present invention, the increase in cost as in the above-described conventional technique is not incurred in a robot system comprising a plurality of robots and a plurality of robot controllers and allowing input of commands by voice.

### BRIEF DESCRIPTION OF THE DRAWINGS

The above and further objects and features of the present invention will become apparent from the following description of an embodiment by referring to the accompanying drawing, in which:
Fig. 1 is an explanatory view of a robot system in a conventional technique employing a voice recognition system; and
Fig. 2 is an explanatory view of a robot system according to one embodiment of the present invention.

### DESCRIPTION OF THE EMBODIMENTS

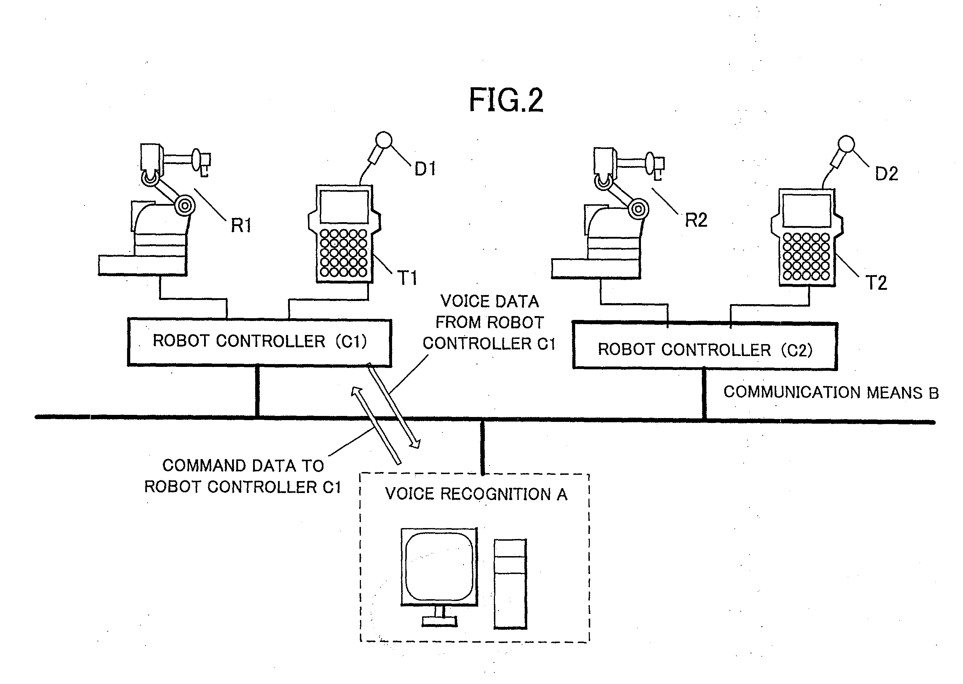

Fig. 2 shows a robot system according to one embodiment of the present invention. This system comprises two robot controllers C1 and C2, and two robots R1 and R2. One robot R1 is controlled by the robot controller C1 and the other robot R2 is controlled by the robot controller C2. Teaching pendants T1 and T2 each equipped with a voice input device using each of microphones (D1 and D2) are connected to the robot controllers C1 and C2, respectively.

Furthermore, the robot controllers C1 and C2 are connected to one voice recognition device A through a communication means B. The communicationmeans B includes communication interfaces (not shown in the figure) respectively provided on the robot controllers C1 and C2 and the voice recognition device A, and software for communication (protocol).

In this system, an operator inputs commands by voice through the microphones D1 and D2 on the respective teaching pendants T1 and T2 so as to perform operations of the robots R1 and R2 respectively corresponding to the teaching pendants T1 and T2. Herein, the "operations of the robots" include, for instance, general operations such as input with a keyboard or the like through the teaching pendant, in addition to jog feeding for teaching or emergency stop.

When commands are inputted by voice through any one of the microphones D1 and D2, analog electric signals (voice signals) representing the voice are subjected to analog-to-digital conversion and are then transmitted to the corresponding robot controller C1 or C2. Alternatively, the microphones D1 and D2 (voice input devices) may be provided on the robot controllers C1 and C2 and in this case, the analog-to-digital conversion is performed within the robot controllers.

The robot controllers C1 and C2 transmit the voice data represented by the digital electric signals to the voice recognition device A using the communication means B. At this time, the robot controllers write address data specifying the robot controller as a transmission origin, for instance, in a header part to transmit the address data together with the voice data, and immediately enter into a state of waiting for a reply from the voice recognition device A.

Incidentally, in general, voice data has a large amount of data and contains components unnecessary for voice recognition, so that processing such as filtering and data compression may be applied to the voice signals in the robot controller side as a preliminary step of the voice recognition. When such processing is performed, a size of communication data may be reduced or a load on the voice recognition device may be reduced.

The voice recognition device A which has received voice data (including data representing the transmission origin) executes voice recognition processing to convert the data into command data that the robot controller on the side of transmission origin can handle. Then, the voice recognition device A delivers the command data the communication means B with address data representing the transmission origin attached. The robot controller on the side of transmission origin in the state of waiting for reply receives the command data corresponding to the transmitted voice data and executes processing represented by the command data. For instance, if an input by an operator is "z axis, plus one step jog movement", the same processing as in a case of inputting one step of jog movement in a direction of +z axis by a normal key operation on the teaching pendant is executed and the robot controlled by the above robot controller executes one step of jog movement. in the direction of +z axis. Further, if an input by the operator is "emergency stop", the same processing as in a case of inputting emergency stop by a normal key operation (or a switch operation, a button operation or the like) on the teaching pendant is executed and the robot controlled by the above robot controller executes emergency stop.

The robot system described above as one embodiment of the present invention comprises two robots and two robot controllers. But it is obvious that the present invention can be applied to a robot system which comprises three or more robots and robot controllers. Even if a number of robots constituting a robot system increases from three to more, one unit of voice recognition device, connected to a plurality of robots through a digital communication using a 100 Base-TX system, can easily execute voice recognition processing for these robots. In addition, a voice recognition device stationed at a remote location may also be used by connecting a network configured by connecting a plurality of robots to an outside network such as Internet through a router.

According to the present invention, it becomes possible to share and utilize one voice recognition device with a plurality of the robots, so that even if two or more robots allowing input of commands by voice are used, an increase in cost may be kept low as compared with a conventional system in which one set of voice recognition means is provided on each of individual devices.

## Claims

1. A robot system comprising a plurality of robot controllers, a plurality of robots respectively controlled by any one of said plurality of robot controllers and one voice recognition device, wherein
a voice input device is provided, for each of said robot controllers, on a robot controller itself or a teaching pendant connected to a robot controller;
said voice recognition device is connected to said robot controllers through communication means;
each of said robot controllers has means of transmitting voice data, inputted in its own voice input device, to said voice recognition device through said communication means;
said voice recognition device has means for receiving voice data transmitted from each of the robot controllers and analyzing and converting the data into robot command data, and means for send back said converted robot command data to the robot controller which transmitted the voice data to be converted through said communication means; and
each of said robot controllers further has means for executing the command in accordance with the robot command data sent back from said voice recognition device.

2. The robot system according to claim 1, wherein each of said robot controllers has filtering means for applying filtering processing to voice data inputted in its own voice input device, and
the voice data of which data amount has been reduced through said filtering means is transmitted to said voice input device.
